# EUROPÄISCHE PATENTSCHRIFT

(11) **EP 1 022 635 B1**
(45) Veröffentlichungstag und Bekanntmachung des Hinweises auf die Patenterteilung: **22.09.2004**
(21) Anmeldenummer: 00100600.6
(22) Anmeldetag: 13.01.2000
(51) Int. Cl.: G05D 23/13

(54) **Sanitäres Thermostatventil**
Sanitary thermostatic valve
Robinet thermostatique sanitaire

(30) Priorität: 19.01.1999 DE 19901854
(43) Veröffentlichungstag der Anmeldung: 26.07.2000
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A- 0 390 121

## Beschreibung

Thermostatventile dienen dazu, Mischwasser mit einer fest eingestellten Temperatur auszugeben. Die Temperatur kann zwar durch Ändern einer Einstellung geändert werden, jedoch bleibt sie normalerweise auf einer bestimmten Temperatur eingestellt. Das bei jedem Benutzungsvorgang verwendete Element dient daher nur zur Steuerung der Menge des das Ventil verlassenden Wassers.

Es ist bereits ein Thermostatventil nach dem ersten Teil des Anspruchs 1 bekannt (EP-A1-390121). Bei diesem Mischventil wird zur Mengensteuerung und zum Umschalten zwischen zwei Wasserauslässen eine Scheibensteuerung verwendet, die stromab des Thermostatventils angeordnet ist.

Der Erfindung liegt die Aufgabe zugrunde, ein kompakt aufgebautes Sanitärventil mit zwei Ausgängen zu schaffen.

Zur Lösung dieser Aufgabe schlägt die Erfindung ein sanitäres Thermostatventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Das Thermostatventil enthält den eigentlichen Thermostaten, der üblicherweise einmal eingestellt wird, sowie ein Betätigungselement zum Ändern der Menge des Mischwassers. Außerdem enthält das Ventil eine Umschalteinrichtung, um zu bestimmen, aus welchem der beiden Mischwasserauslässe das Wasser austritt. Es kann beispielsweise vorgesehen sein, dass die Umschalteinrichtung so gesteuert werden kann, dass auch ein Austreten des Mischwassers aus beiden Auslässen gleichzeitig auftreten kann.

Insbesondere kann in Weiterbildung vorgesehen sein, dass die Umschalteinrichtung zum wahlweisen Betrieb eines der beiden Mischwasserauslässe ausgebildet ist.

In Weiterbildung der Erfindung kann vorgesehen sein, dass die Umschalteinrichtung in die Mengensteuerung integriert ist. Dies führt dazu, dass das Ventil noch kompakter aufgebaut werden kann.

Es kann vorgesehen sein, dass für das Umschalten und die Mengensteuerung getrennte Betätigungselemente vorhanden sind. Insbesondere wird jedoch von der Erfindung vorgeschlagen, dass die Umschalteinrichtung durch das Betätigungselement für die Mengensteuerung betätigt werden kann. Hierbei kann es sich um eine unterschiedliche Art der Handhabung dieses Betätigungselements handeln oder auch um eine Handhabung in der gleichen Weise wie für die Mengensteuerung, jedoch über eine bestimmte Stellung hinaus.

Als besonders günstig hat es sich herausgestellt, die Betätigung so vorzunehmen, dass aus der geschlossenen Stellung des Ventils heraus eine Öffnung des einen oder anderen Mischwasserauslasses durch Verstellen des Betätigungselements in die eine oder die entgegengesetzte Richtung erfolgen kann.

In Weiterbildung der Erfindung kann vorgesehen sein, dass zur Mengensteuerung der Strömungsquerschnitt sowohl beim Eintreten des Wassers in das Ventil als auch beim Verlassen des Ventils geändert wird.

Erfindungsgemäß ist vorgesehen, dass die Mengensteuerung des Ventils eine Scheibensteuerung aufweist, in die vorzugsweise auch die Umschalteinrichtung integriert ist. Scheibensteuerungen weisen beispielsweise eine feststehende aus Keramik bestehende Scheibe und eine dieser gegenüber bewegbare Steuerscheibe ebenfalls aus Keramik auf, wobei eine mehr oder weniger große Überschneidung von Öffnungen in den beiden Scheiben den Strömungsquerschnitt bestimmt.

Erfindungsgemäß weist die feststehende Steuerscheibe eine Einlassöffnung für kaltes Wasser, eine Einlassöffnung für warmes Wasser und je eine Mischwasseröffnung für jeden Mischwasserauslass aus dem Ventil auf.

Erfindungsgemäß kann vorgesehen sein, dass die Anordnung der Öffnungen in der feststehenden Steuerscheibe symmetrisch zu einer Linie ist, insbesondere einer Durchmesserlinie.

In nochmaliger Weiterbildung der Erfindung kann vorgesehen sein, dass die bewegbare Steuerscheibe zwei Paare von Durchtrittsöffnungen für kaltes und warmes Wasser aufweist. Auch diese Öffnungen können symmetrisch angeordnet sein.

Für das Mischwasser kann die bewegbare Steuerscheibe eine Durchgangsöffnung aufweisen.

Die Durchgangsöffnung für kaltes Wasser kann mit Vorteil der Duchgangsöffnung für warmes Wasser diametral gegenüberliegend angeordnet sein.

Erfindungsgemäß kann vorgesehen sein, dass das Wasser in axialer Richtung durch die Scheibensteurung hindurchgeht, sowohl beim Eintritt in das Ventil als auch beim Verlassen des Ventils.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Längsschnitt durch eine zum Einsetzen in eine Armatur bestimmte Ventilkartusche;
- Fig. 2: eine Ansicht einer feststehenden Steuerscheibe;
- Fig. 3: einen ersten Schnitt durch die Steuerscheibe der Fig. 2;
- Fig. 4: einen zweiten Schnitt durch die Steuerscheibe der Fig. 2;
- Fig. 5: eine Aufsicht auf die feststehende Steuerscheibe der Fig. 2 von der gegenüberliegenden Seite;
- Fig. 6: eine Aufsicht auf die bewegbare Steuerscheibe von oben in Fig. 1;
- Fig. 7: einen ersten Schnitt durch die Steuerscheibe der Figur 6;
- Fig. 8: eine Aufsicht auf die bewegbare Steuerscheibe der Fig. 6 aus Richtung der feststehenden Steuerscheibe, d. h. in Fig. 1 von unten;
- Fig. 9: einen zweiten Schnitt durch die bewegbare Steuerscheibe der Fig. 6;
- Fig. 10: schematisch die Ansicht der aufeinander liegenden Steuerscheiben in geschlossener Position des Ventils;
- Fig. 11: eine der Fig. 10 entsprechende Darstellung bei teilweiser Öffnung des einen Mischwasseräuslasses;
- Fig. 12: eine der Fig. 11 entsprechende Darstellung bei teilweiser Öffnung des anderen Mischwasserauslasses.

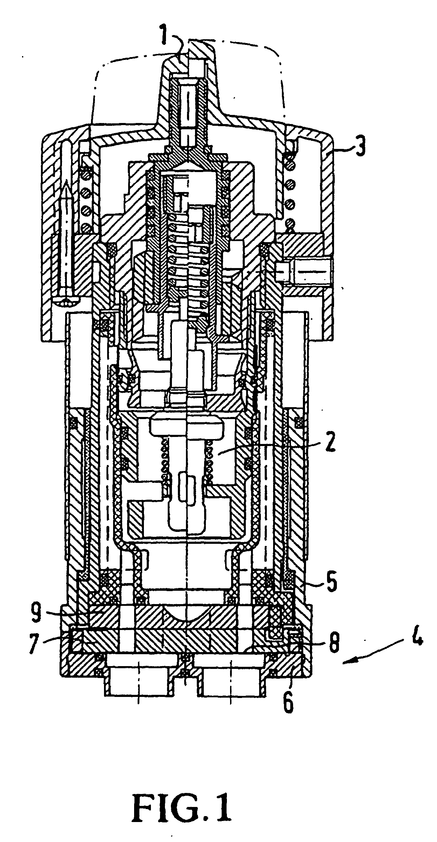

Fig. 1 zeigt einen Axialschnitt durch eine Ventilkartusche nach der Erfindung, wobei auf beiden Seiten der Achse das Thermostatventil in unterschiedlichen Positionen dargestellt ist. Das Ventil enthält ein erstes Betätigungselement 1, mit dem die Solltemperatur des Thermostaten 2 eingestellt werden kann. Das Ventil enthält ein zweites Betätigungselement 3 in Form eines Drehgriffs, mit dem die Menge des Wassers, das das Ventil verlässt, gesteuert werden kann. Einzelheiten des Thermostatventils werden nicht näher erläutert, da diese an sich bekannt sind.

Zur Steuerung der Menge des Mischwassers und zum Umschalten zwischen beiden Auslässen enthält das Ventil eine Scheibensteuerung 4, die in der Kartusche 5 oberhalb eines Bodens 6 angeordnet ist. Der Boden dient dazu, die Verbindung zwischen der Wasserführung innerhalb der Kartusche und dem Armaturenkörper herzustellen, in den die Kartusche eingesetzt wird. Die Scheibensteuerung enthält eine feststehende Steuerscheibe 7, die auf dem Boden 6 aufliegt. Auf der in Fig. 1 oberen Steuerfläche 8 der feststehenden Steuerscheibe 7 liegt eine bewegbare Steuerscheibe 9 auf, die im dargestellten Beispiel ebenfalls aus Keramik besteht. Diese bewegbare Steuerscheibe 9 kann mit Hilfe des Betätigungselements 3 verdreht werden, so dass die gegenseitige Position von Öffnungen in den beiden Steuerscheiben 7, 9 verändert werden kann.

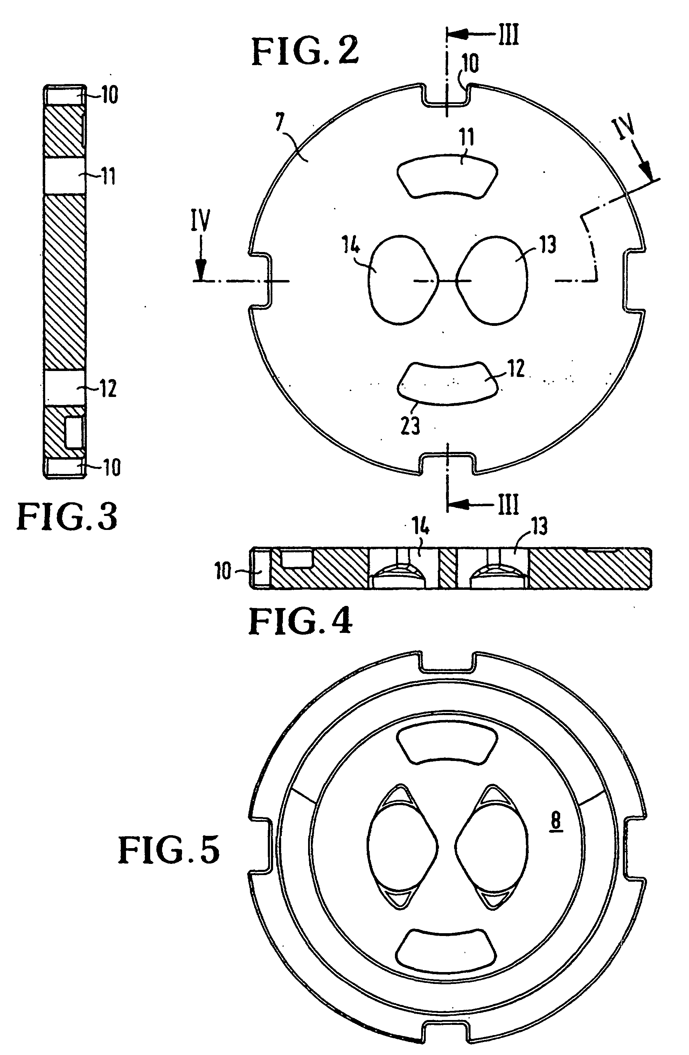

Nun zu Fig. 2. Hier ist die feststehende Steuerscheibe 7 zu sehen, und zwar von der in Fig. 1 unteren Seite, also aus Richtung des Bodens 6. Die korrekte Anordnung der feststehenden Steuerscheibe 7 in der Kartusche 5 wird durch unterschiedlich breite Kerben 10 gewährleistet, die im Umfang der Steuerscheibe 7 angeordnet sind. Die Steuerscheibe weist zwei durchgehende Öffnungen 11, 12 auf, von denen die eine für das Eintreten von kaltem und die andere für das Eintreten von warmem Wasser bestimmt ist. Beide Einlassöffnungen 11, 12 erstrecken sich als bogenförmige Schlitze mit konzentrischen Außen- und Innenkanten über einen Bogen von etwa 45°. Beide Öffnungen 11, 12 sind sowohl symmetrisch zu einer sie verbindenden Durchmesserlinie als auch zu einer hierzu senkrecht verlaufenden Durchmesserlinie angeordnet.

Auf einer Durchmesserlinie, die gegenüber einer die beiden Öffnungen 11, 12 verbindenden Linie senkrecht verläuft, sind zwei Austrittsöffnungen 13, 14 angeordnet, die etwa tropfenförmig ausgebildet sind. Auch diese Austrittsöffnungen 13, 14 sind symmetrisch in der oben beschriebenen Weise angeordnet.

Der Schnitt der Fig. 3 zeigt, dass die Einlassöffnungen 11, 12 gerade durch die Steuerscheibe 7 hindurchgehen.

Aus dem Vergleich der Figuren 2 und 5 ergibt sich, dass die Auslassöffnungen 13, 14 in den beiden einander gegenüberliegenden Flächen der Steuerscheibe 7 unterschiedlich ausmünden. Fig. 5 zeigt die bereits erwähnte Steuerfläche 8, also diejenige Fläche der Steuerscheibe 7, auf der die bewegbare Steuerscheibe 9 aufliegt.

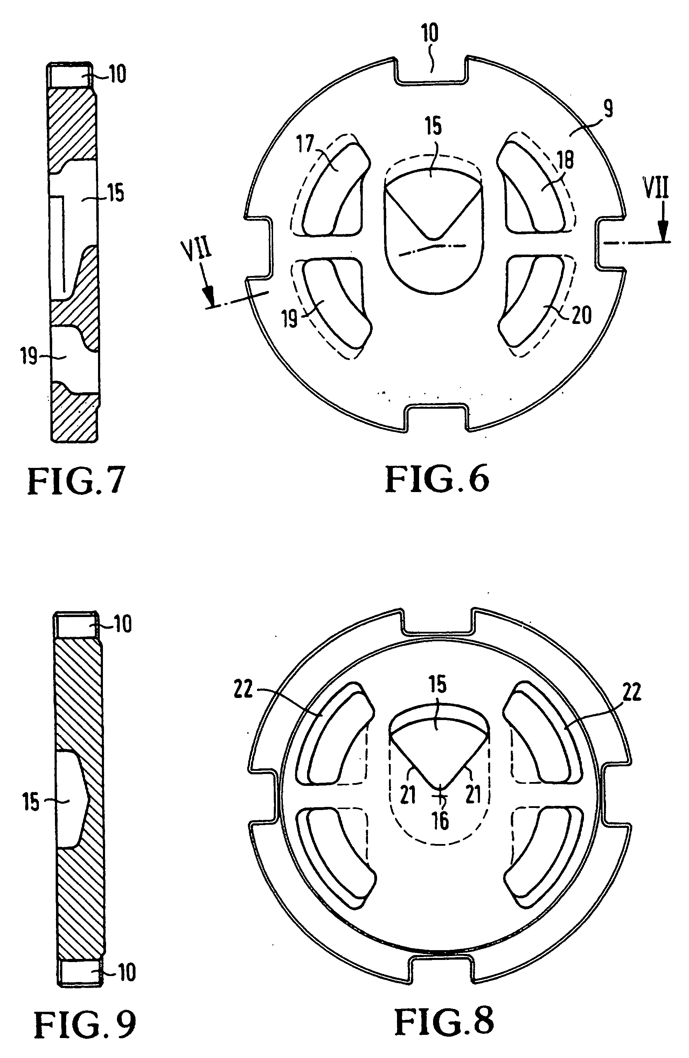

Nun zu den Figuren 6 bis 9, die entsprechende Darstellungen der verdrehbaren Steuerscheibe 9 zeigen, jedoch in anderem Maßstab gezeichnet sind. Fig. 6 zeigt die Aufsicht auf die verdrehbare Steuerscheibe 9, in Fig. 1 von oben, d. h. von der Seite des Thermostaten 2 her. Wiederum sind im Außenumfang der Steuerscheibe Kerben 10 vorhanden, die zur korrekten Positionierung der Steuerscheibe 9 und zu ihrer Mitnahme dienen. Die Steuerscheibe 9 enthält eine Durchgangsöffnung 15, die in der Oberseite der Steuerscheibe 9 als ovale Öffnung ausmündet, während sie in der gegenüberliegenden Unterseite als Kreissektor ausmündet. Die Spitze dieses Kreissektors reicht etwa an den Mittelpunkt 16 der Scheibe 9 heran.

Die Steuerscheibe 9 weist darüber hinaus zwei Durchgangsöffnungen 17, 18 für kaltes Wasser und zwei Durchgangsöffnungen 19, 20 für warmes Wasser auf. Die Durchgangsöffnung 17 für das kalte Wasser ist diametral zu der Durchgangsöffnung 20 für das warme Wasser angeordnet, was ebenfalls für die Öffnungen 18, 19 gilt. Auch hier sind die Öffnungen 17 bis 20 symmetrisch zu zwei senkrecht aufeinander stehenden Durchmesserlinien angeordnet. Eine dieser Durchmesserlinien fällt mit der Winkelhalbierenden zwischen zwei geradlinigen Seitenkanten 21 der Durchtrittsöffnung 15 zusammen. Die leicht schräg durch die Steuerscheibe 9 verlaufenden Außenkanten 22 der Öffnungen 17 bis 21 liegen auf dem gleichen Radius wie die entsprechenden Außenkanten 23 der Einlassöffnungen 11, 12 in der feststehenden Steuerscheibe 7.

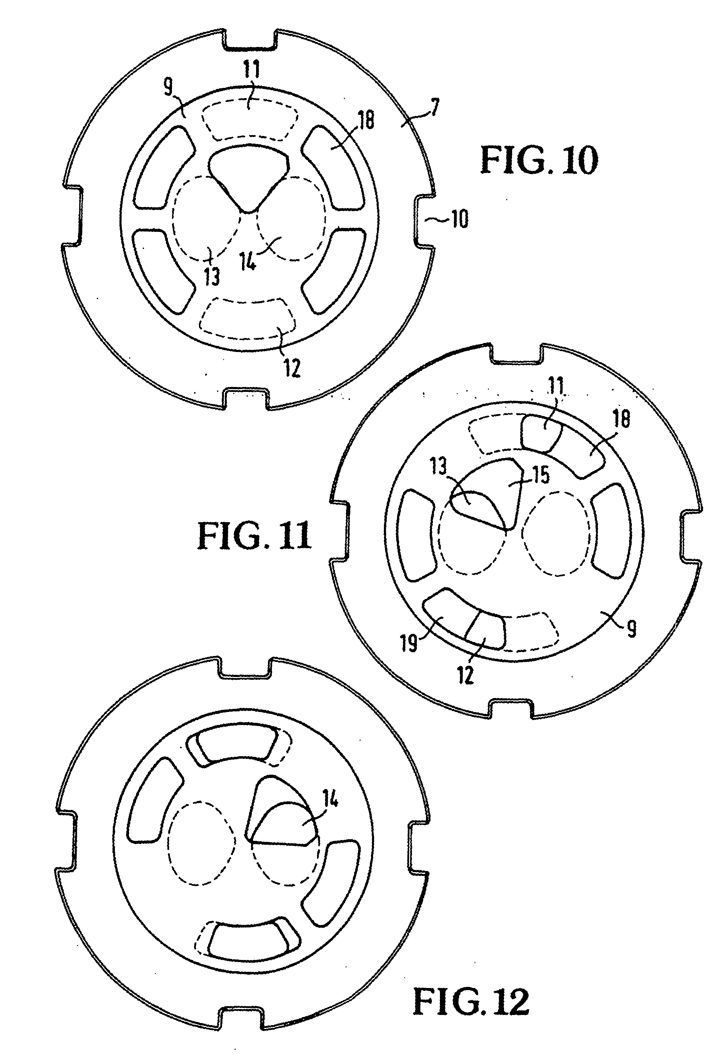

Die Wirkungsweise des Ventils wird am besten aus den schematischen Figuren 10 bis 12 ersichtlich. Die Figuren zeigen die feststehende Steuerscheibe 7 mit einer auf ihr liegenden bewegbaren Steuerscheibe 9, wobei die bewegbare Steuerscheibe 9 nur vereinfacht dargestellt ist, also ohne ihren die Kerben 10 aufweisenden Rand. In Fig. 10 ist die bewegbare Steuerscheibe 9 in einer Ausgangsposition dargestellt, in der die Einlassöffnungen 11 und 12 der feststehenden Steuerscheibe 7 vollständig durch die bewegbare Steuerscheibe 9 abgeschlossen sind. Beispielsweise soll die Einlassöffnung 11 die Einlassöffnung für kaltes Wasser und die Einlassöffnung 12 diejenige für warmes Wasser sein. Die Durchgangsöffnung 15 der verdrehbaren Steuerscheibe 9 überschneidet sich in ihrem Randbereich etwas mit den beiden Auslassöffnungen 13, 14 der fettstehenden Steuerscheibe. Dies ist jedoch ohne Einfluss, da kein Wasser in das Ventil gelangen kann. Wird nun die bewegbare Steuerscheibe 9 mit Hilfe des Betätigungselements 3 in Fig. 10 im Gegenuhrzeigersinn verschwenkt, so entsteht die in Fig. 11 dargestellte Position. Die Durchtrittsöffnung 18 für das kalte Wasser in der bewegbaren Steuerscheibe 9 überschneidet sich zum Teil mit der Einlassöffnung 11 für das kalte Wasser. Das Gleiche gilt für die beiden Öffnungen 19 und 12. Das kalte Wasser kann durch die Öffnung 18 zum Thermostaten 2 fließen, ebenso das warme Wasser durch die Öffnung 19. Von dem Thermostaten 2 fließt das Mischwasser zurück zu der Durchgangsöffnung 15, von wo aus es in die Auslassöffnung 13 fließen kann. Je nachdem, wie weit die Scheibe 9 im Gegenuhrzeigersinn verdreht wird, fließt mehr oder weniger Wasser der eingestellten Temperatur zu dem einen Auslass aus dem Ventil. Wird nun das Betätigungselement 3 in umgekehrter Richtung verdreht, so verringert sich die Menge des durch die Öffnung 13 fließenden Wassers bis auf null. In der Mittelstellung, siehe Fig. 10, ist das Ventil geschlossen. Bei Weiterdrehen im Uhrzeigersinn entsteht die in Fig. 12 dargestellte Position, wo also das Mischwasser aus der zweiten Auslassöffnung 14 ausströmen kann. Die beiden Maximalstellungen, also die Stellung der maximalen Öffnung des einen und des anderen Auslasses können durch Anschläge begrenzt sein. Sowohl die Mengensteuerung als auch die Umschalteinrichtung zwischen den beiden Auslässen sind in der Scheibensteuerung integriert. Dadurch wird eine Ventilkartusche mit einem sehr kompakten Aufbau geschaffen.

## Patentansprüche

1. Sanitäres Thermostatventil, mit
1.1 einem Kaltwassereinlass,
1.2 einem Warmwassereinlass,
1.3 zwei Mischwasserauslässen,
1.4 einem Thermostaten (2) zur Festlegung der Temperatur des Mischwassers,
1.5 einer eine Scheibensteuerung aufweisenden Mengensteuerung zur Steuerung der Menge des Mischwassers wobei die Scheibensteuerung eine feststehende und eine bewegbare Steuerscheibe hat, sowie mit
1.6 einer Umschalteinrichtung zum Umschalten zwischen den beiden Mischwasserauslässen,
**dadurch gekennzeichnet, dass**
1.7 die feststehende Steuerscheibe (7) eine Einlassöffnung (11 ) für kaltes Wasser, eine Einlassöffnung (12) für warmes Wasser und je eine Auslassöffnung (13, 14) für jeden Auslass aus dem Ventil aufweist

2. Ventil nach Anspruch 1, bei dem die Umschalteinrichtung zum wahlweisen Betrieb einer der beiden Mischwasserauslässe ausgebildet ist.

3. Ventil nach Anspruch 1 oder 2, bei dem die Umschalteinrichtung in die Mengensteuerung integriert ist.

4. Ventil nach einem der vorhergehenden Ansprüche, bei dem die Umschalteinrichtung durch ein Betätigungselement (3) betätigt wird, das auch die Mengensteuerung betätigt.

5. Ventil nach einem der vorhergehenden Ansprüche, bei dem zur Mengensteuerung der Strömungsquerschnitt sowohl der Wassereinlässe in das Ventil als auch der Wasserauslässe aus dem Ventil geändert wird.

6. Ventil nach einem der vorhergehenden Ansprüche, bei dem die Umschaltung durch das wahlweise Betätigen der Mengensteuerung aus der geschlossenen Stellung heraus erfolgt.

7. Ventil nach einem der vorhergehenden Ansprüche, bei dem die Anordnung der Öffnungen (11, 12, 13, 14) in der feststehenden Steuerscheibe (7) symmetrisch ist.

8. Ventil nach einem der vorhergehenden Ansprüche, bei dem die bewegbare Steuerscheibe (9) zwei Paare von Durchtrittsöffnungen (17, 18, 19, 20) für kaltes und warmes Wasser aufweist.

9. Ventil nach einem der vorhergehenden Ansprüche, bei dem die bewegbare Steuerscheibe (9) eine Durchgangsöffnung (15) für Mischwasser aufweist.

10. Ventil nach einem der vorhergehenden Ansprüche, bei dem die Anordnung der Öffnungen (15, 17, 18, 19, 20) in der bewegbaren Steuerscheibe (9) symmetrisch ist.

11. Ventil nach einem der Ansprüche 8 bis 10, bei dem die Durchgangsöffnungen für kaltes und warmes Wasser einander paarweise diametral gegenüberliegen.

12. Ventil nach einem der vorhergehenden Ansprüche, bei dem der Einlass in die Mengensteuerung und der Auslass aus der Mengensteuerung in axialer Richtung erfolgen.

13. Ventil nach einem der vorhergehenden Ansprüche, bei dem die Bewegung der Umschalteinrichtung begrenzt ist, vorzugsweise durch Anschläge in der feststehenden Steuerscheibe (7) der Scheibensteuerung (4).

## Claims

1. A thermostatted plumbing valve having
1.1 a cold-water inlet,
1.2 a hot-water inlet,
1.3 two outlets for mixed hot and cold water,
1.4 a thermostat (2) for setting the temperature of the mixed hot and cold water,
1.5 a flow-rate control for controlling the flow rate of mixed hot and cold water having a disk-type control, where the disk-type control has a fixed control disk and a movable control disk, as well as
1.6 a switching device for switching between the two outlets for mixed hot and cold water,
**characterized in that**
1.7 the fixed control disk (7) has an inlet aperture (11) for cold water, an inlet aperture (12) for hot water, and an outlet aperture (13, 14) for each and every outlet from the valve.

2. A valve according to claim 1, wherein the switching device is configured for selectively operating one of the two outlets for mixed hot and cold water.

3. A valve according to claim 1 or claim 2, wherein the switching device is incorporated into the flow-rate control.

4. A valve according to any of the foregoing claims, wherein the switching device is operated by an operating element (3) that also operates the flow-rate control.

5. A valve according to any of the foregoing claims, wherein the cross-sectional areas of both the inlets for water entering the valve and the outlets for water exiting the valve are varied in order to control the flow rate.

6. A valve according to any of the foregoing claims, wherein the switching is caused by selectively repositioning the flow-rate control relative to its closed position.

7. A valve according to any of the foregoing claims, wherein the apertures (11, 12, 13, 14) in the fixed control disk (7) are symmetrically arranged.

8. A valve according to any of the foregoing claims, wherein the movable control disk (9) has two pairs of through apertures (17, 18, 19, 20) for cold and hot water.

9. A valve according to any of the foregoing claims, wherein the movable control disk (9) has a through aperture (15) for mixed hot and cold water.

10. A valve according to any of the foregoing claims, wherein the apertures (15, 17, 18, 19, 20) in the movable control disk (9) are symmetrically arranged.

11. A valve according to any of claims 8 - 10, wherein the respective pairs of through apertures for hot and cold water are arranged diametrically opposite one another.

12. A valve according to any of the foregoing claims, wherein water enters the flow-rate control and exits the flow-rate control along the axial direction.

13. A valve according to any of the foregoing claims, wherein the movement of the switching device is limited, preferably by stops on the fixed control disk (7) of the disk-type control (4).

## Revendications

1. Robinet thermostatique sanitaire, avec
1.1 une admission d'eau froide,
1.2 une admission d'eau chaude,
1.3 deux sorties d'eau mitigée,
1.4 un thermostat (2) destiné à régler la température de l'eau mitigée,
1.5 un réglage de la quantité présentant une commande de disque destiné au réglage de la quantité de l'eau mitigée, la commande de disque disposant d'un disque de réglage fixe et d'un disque de réglage mobile, ainsi qu'avec
1.6 un dispositif de commutation destiné à commuter entre les deux sorties d'eau mitigée,
**caractérisé par le fait que**
1.7 le disque de réglage fixe (7) présente un orifice d'admission (11) pour eau froide, un orifice d'admission (12) pour eau chaude et, à chaque fois, un orifice de sortie (13, 14) pour chaque sortie du robinet.

2. Robinet selon la revendication 1, pour lequel le dispositif de commutation est réalisé en vue du fonctionnement sélectif d'un des deux orifices de sortie d'eau mitigée.

3. Robinet selon la revendication 1 ou 2, pour lequel le dispositif de commutation est intégré dans le réglage de la quantité.

4. Robinet selon l'une quelconque des revendications précédentes, pour lequel le dispositif de commutation est actionné par un élément d'actionnement (3) qui actionne également le réglage de la quantité.

5. Robinet selon l'une quelconque des revendications précédentes, pour lequel la section de passage aussi bien des admissions d'eau dans le robinet que des sorties d'eau du robinet est modifiée pour le réglage de la quantité.

6. Robinet selon l'une quelconque des revendications précédentes, pour lequel la commutation s'effectue par l'actionnement sélectif du réglage de la quantité par la position fermée.

7. Robinet selon l'une quelconque des revendications précédentes, pour lequel l'agencement des orifices (11, 12, 13, 14) est symétrique dans le disque de réglage fixe (7).

8. Robinet selon l'une quelconque des revendications précédentes, pour lequel le disque de réglage mobile (9) présente deux paires d'orifices de passage (17, 18, 19, 20) pour eau froide et eau chaude.

9. Robinet selon l'une quelconque des revendications précédentes, pour lequel le disque de réglage mobile (9) présente un orifice de passage (15) pour eau mitigée.

10. Robinet selon l'une quelconque des revendications précédentes, pour lequel l'agencement des orifices (15, 17, 18, 19, 20) est symétrique dans le disque de réglage mobile (9).

11. Robinet selon l'une quelconque des revendications 8 à 10, pour lequel les orifices de passage pour eau froide et eau chaude sont diamétralement opposés l'un par rapport à l'autre par paire.

12. Robinet selon l'une quelconque des revendications précédentes, pour lequel l'admission dans le réglage de la quantité et la sortie du réglage de la quantité s'effectue dans le sens axial.

13. Robinet selon l'une quelconque des revendications précédentes, pour lequel le mouvement du dispositif de commutation est limité, de préférence par des butées dans le disque de réglage fixe (7) de la commande de disque (4).
